# EUROPEAN PATENT SPECIFICATION

(11) **EP 3 633 808 B1**
(45) Date of publication and mention of the grant of the patent: **02.06.2021**
(21) Application number: 19199487.0
(22) Date of filing: 25.09.2019
(51) Int. Cl.: H02G 3/04, F16B 7/04

(54) **CABLE LADDER**
KABELLEITER
ÉCHELLE À CÂBLES

(30) Priority: 02.10.2018 ES 201831498 U
(43) Date of publication of application: 08.04.2020
(73) Proprietor: Unex Aparellaje Electrico S.L., 08903 L'Hospitalet de Llobregat (Barcelona) (ES)
(72) Inventor: MOSTAZO OVIEDO, José Antonio, 08903 L'Hospitalet de Llobregat (ES)
(74) Representative: Curell Suñol S.L.P.

(56) References cited:
- WO-A1-2006/028345
- WO-A1-2016/046436
- AU-A4- 2011 100 385
- KR-A- 20050 071 317
- Lanz Oensingen Ag: "Lanz - im Tunnel zuhause 1.6", , 31 July 2017 (2017-07-31), XP055455691, Retrieved from the Internet: URL:http://www.lanz-oens.com/fileadmin/kat aloge_pdfs/LANZ_Tunnel_1.6.pdf [retrieved on 2018-03-01]

## Description

### Field of the Invention

The invention is comprised in the field of the cable ladder type cable trays which are used for guiding electric cables, fiber optic cables or cables of another type.

The invention specifically relates to cable ladders in which both the side rails and the crosspieces are profiles made of a polymeric material.

More specifically, the invention relates to a cable ladder of the type comprising two coplanar side rails attached to one another by a plurality of crosspieces spaced from one another, said plurality of crosspieces constituting a discontinuous support surface for cables, wherein each of the crosspieces is a profile made of a polymeric material and each of the side rails is a profile made of a polymeric material, and wherein the ends of said crosspieces fit, directly or through an intermediate connecting piece, in an inner side of said side rails facing an inner side of the opposite side rail.

### State of the Art

Document WO2016046436A1 discloses cable ladders of this type. The method for supplying cable ladders of this type to end users usually consists of the factory assembly of the side rails and the crosspieces so as to form cable ladder segments, and storing and transporting these cable ladder segments to supply them to end users. When the cable ladder has a large width, i.e., when the crosspieces thereof have a long length, these cable ladder segments take up considerable space, making them hard to handle, store, and transport.

### Description of the invention

The purpose of the invention is to provide a cable ladder of the type indicated above, which can be more readily handled, stored, and transported to the site where it is to be installed.

This is achieved by means of a cable tray of the type indicated above, characterized in that it comprises an intermediate side rail arranged between the two side rails, said intermediate side rail being formed by two half side rails which are assembled together, each of said half side rails being a profile made of a polymeric material and comprising a first side in which the ends of the crosspieces fit, directly or through an interposed connecting piece, and a second side, opposite said first side, which fits in the second side of the other one of said half side rails so as to form said intermediate side rail.

As will be seen below in the description of the embodiments, this configuration according to the invention allows separating the cable ladder into two halves, each of these halves being formed by a side rail, a half side rail and crosspieces attaching said side rail and said half side rail to one another. These two cable ladder halves can be factory-formed separately and later assembled by the end user so as to form the cable tray at the site where it is to be installed. The assembly of the two cable tray halves by the end user is easy to perform since the two half side rails must simply be assembled together.

Preferably, the two ends of each crosspiece fit, directly or through an interposed connecting piece, interchangeably in said first side of any of the two half side rails or in said inner side of any of the two side rails. This configuration considerably simplifies the method of forming each of the two cable tray halves.

Preferably, each of the side rails has a lower face in one plane and each of the half side rails has a lower face in one plane, and said lower faces of said side rails and of said half side rails are coplanar. This configuration has the advantage that the cable ladder can be supported on a surface in one and the same plane, such as for example on a supporting bar, such that both the two side rails and the intermediate side rail are supported on said surface. Stable support of the cable ladder is thereby achieved, and the half side rails are furthermore prevented from being able to experience bending under the weight of the cables, causing them to become disassembled.

Preferably, the second sides of the half side rails are shaped such that they snap fit together by relative movement of one of said half side rails with respect to the other one of said half side rails. This makes it easier for the cable ladder to be formed from the two cable ladder halves by the end user, who must simply bring one of the halves in proximity to the other and exert the force required to snap fit the two half side rails together. More preferably, the formation is such that the relative movement for snap fitting the two half side rails together is made in a direction perpendicular to the plane of the lower faces of said side rails and said half side rails. This makes the operation to be carried out by the end user to snap fit the two cable ladder halves together even easier because one of the two halves can be supported on a surface in one plane and the other half pushed down. Furthermore, the very weight of the cables on the cable ladder prevents the two half side rails from becoming disassembled.

In preferred embodiments, the second sides of the half side rails have a cross-section shape comprising a first bent toe forming a first cradle and a first free end, and a second bent toe forming a second cradle and a second free end, said second cradle and said second free end being shifted with respect to said first cradle and said first free end, and said first bent toe and said second bent toe being sized such that said first free end and said second free end of each of the half side rails fit, respectively, in said second cradle and said first cradle of the other one of said half side rails. This configuration provides a particularly robust assembly of the two half side rails. Furthermore, it makes it easier for the end user to place the one of the two half side rails facing the other one in the suitable position so as to fit them together.

Preferably, the first free end and the second free end of the two half side rails comprise complementary singular forms, shaped such that the first free end and the second free end of one of said half side rails are respectively snapped together with the second free end and the first free end of the other one of said half side rails through the cooperation of said singular forms between them. These singular forms can advantageously be projections and recesses in which said projections fit. This snapping together of the two half side rails through the cooperation of said singular forms reduces the risk of the two half side rails from becoming inadvertently disassembled, for example by being accidentally struck. Furthermore, the snapping together lets the user know that the two half side rails have been correctly assembled.

Preferably, the intermediate side rail formed by the two half side rails assembled together has the general shape of an I-profile, with a lower flange and an upper flange demarcating one another on either side of said intermediate side rail, a channel in which the ends of said crosspieces fit, directly or through an interposed connecting piece, said channel having a height substantially equal to the height of said crosspieces. As a result of this configuration the upper surface of the intermediate side rail is virtually at the same level as the upper surface of the crosspieces, whereby the intermediate side rail does not get in the way of laying cables in the cable ladder.

Preferably, the two half side rails are equal to one another, whereby reducing the costs of manufacturing the cable ladder and at the same time rendering operations for the factory assembly of the two halves of said cable ladder easier.

The invention also comprises other detail features shown in the following detailed description of embodiments of the invention and in the attached drawings.

### Brief Description of the Drawings

The advantages and features of the invention can be seen from the following description in which, in a non-limiting manner with respect to the scope of the main claim, preferred embodiments of the invention are set forth in reference to the drawings.
Figure 1 is a perspective view of the cable ladder according to a first possible embodiment, in which the cable ladder is straight. The two cable ladder halves are shown separated.
Figure 2 is a view identical to Figure 1, in which the two cable ladder halves are assembled.
Figure 3 is an enlarged view of Figure 1.
Figure 4 is an enlarged view of Figure 2.
Figure 5 is a front view corresponding to Figure 4.
Figure 6 is a perspective view of the two half side rails separated.
Figure 7 is a front view corresponding to Figure 6.
Figure 8 is a perspective view of the two half side rails assembled together forming the intermediate side rail.
Figure 9 is a front view corresponding to Figure 8.
Figure 10 is a front view of the two half side rails separated, positioned to be assembled together.
Figure 11 is a perspective view of the cable ladder according to a second possible embodiment, in which the cable ladder forms an X-crossing. The two cable ladder halves are shown separated.
Figure 12 is a perspective view of the cable ladder according to a third possible embodiment, in which the cable ladder forms a T-joint. The two cable ladder halves are shown separated.

### Detailed Description of Embodiments of the Invention

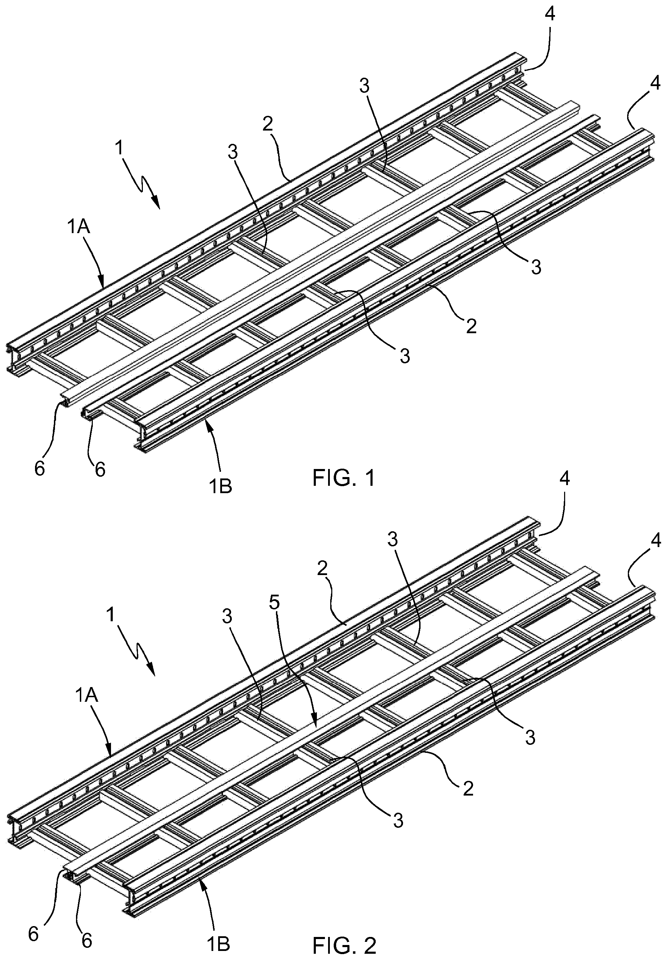

Figures 1 to 10 show a first embodiment in which the cable ladder is straight.

As can be seen in Figures 2, 4, and 5, the cable ladder 1 comprises two coplanar side rails 2 attached to one another by a plurality of crosspieces 3 spaced from one another. The set of these crosspieces 3 constitutes a discontinuous support surface for cables. The inner side 4 of each of the two side rails 2, facing the opposite side rail 2, and the ends of the crosspieces 3 are formed such that said ends of the crosspieces 3 fit in said inner sides 4 of the side rails 2. More precisely, in the depicted example, the inner side 4 of each of the side rails 2 forms a channel having a face open towards the opposite side rail 2. These channels of the side rails 2 and the two ends of each of the crosspieces 3 are formed such that said ends of the crosspieces 3 are introduced in said channels at the open face thereof and are fitted and snapped into said channels.

The cable ladder 1 according to the invention has the particularity that it can be separated into two halves 1A, 1B, each of said cable ladder halves 1A, 1B being formed by one of said two side rails 2, a half side rail 6 and a plurality of said crosspieces 3 attaching said side rail 2 and said half side rail 6 to one another. The two half side rails 6 have a first side 7 formed such that the ends of the crosspieces 3 fit in said first side 7. The two ends of the crosspieces 3 fit interchangeably in the first side 7 of any of the two half side rails 6, and also fit interchangeably in the inner side 4 of any of the two side rails 2.

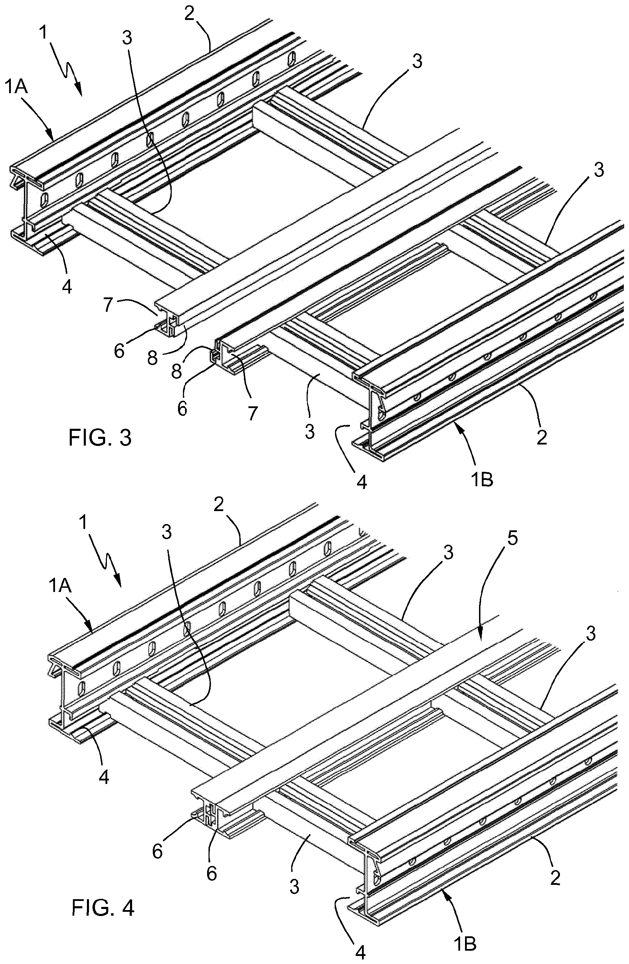

Figures 1 and 3 show the two halves 1A, 1B of the cable ladder 1 separated. The formation of the cable ladder 1 from the two halves 1A, 1B is performed by assembling the two half side rails 6 to one another, then forming an intermediate side rail 5 of the cable ladder 1. To that end, the two half side rails 6 have a second side 8, opposite said first side 7, which is formed such that said two half side rails 6 are assembled to one another by means of fitting the second side 8 of one of them with the second side of the other one.

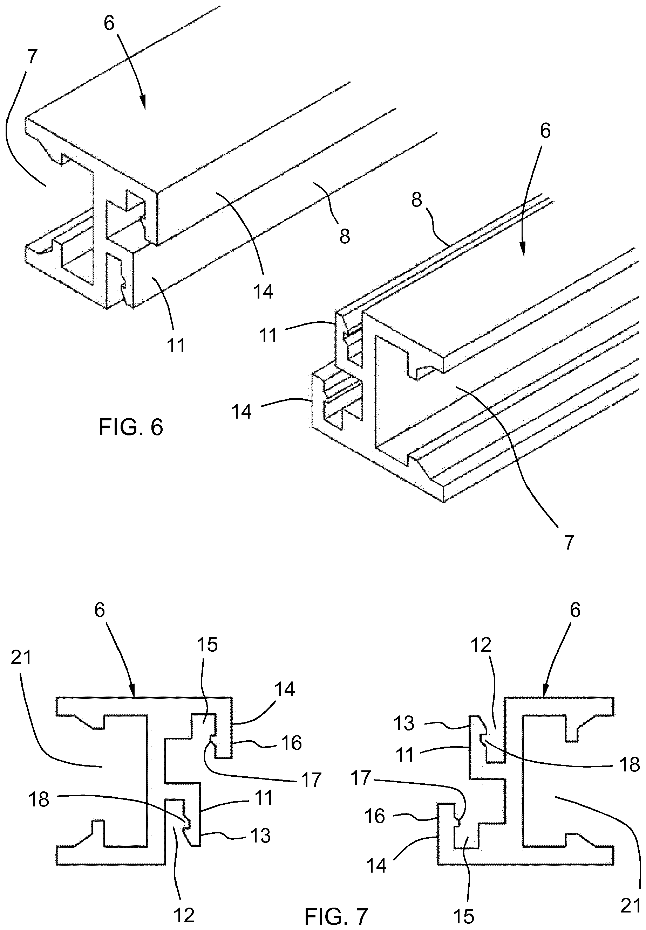

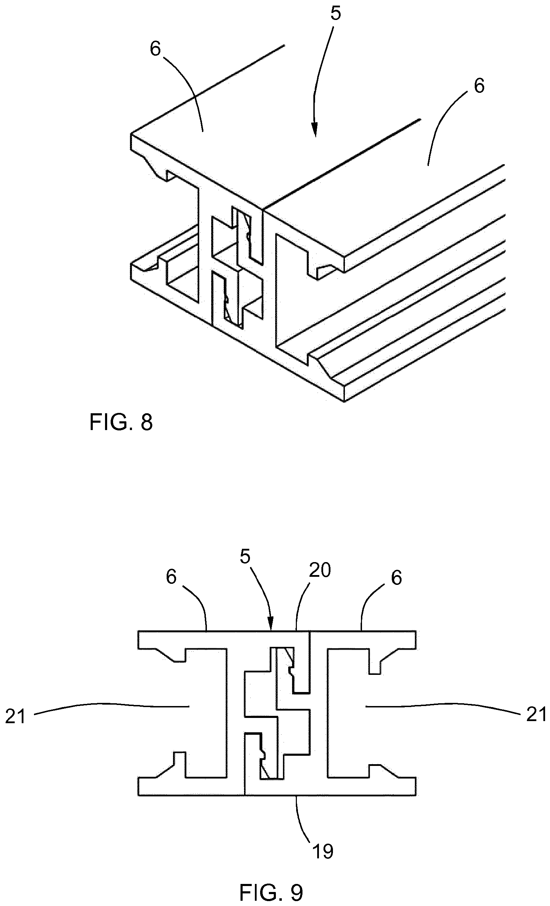

Advantageously, the two half side rails 6 are equal to one another. As can be seen in Figures 6 to 10, in the depicted example the two side rails 6 are equal, but to assemble same, one of them is placed in a turned-over position with respect to the other one. More precisely, as shown in Figure 7, the second side 8 of each half side rail 6 has a cross-section shape comprising a first bent toe 11 forming a first cradle 12 and a first free end 13, and a second bent toe 14 forming a second cradle 15 and a second free end 16. The second cradle 15 and the second free end 16 are shifted with respect to the first cradle 12 and the first free end 13. The first bent toe 11 and the second bent toe 14 are sized such that the first free end 13 and the second free end 16 of each half side rail 6 fit, respectively, in the second cradle 15 and the first cradle 12 of the other one of said half side rails 6, as shown in Figures 8 and 9. Furthermore, the first free end 13 and the second free end 16 of each half side rail 6 comprise complementary singular forms 17, 18, shaped such that the first free end 13 and the second free end 16 of each half side rail 6 are respectively snapped together with the second free end 16 and the first free end 13 of the other half side rail 6 through the cooperation of said singular forms 17, 18 between them. In the depicted example, these singular forms are a protrusion 17 at the second free end 16 and a recess 18 at the first free end 13 of each half side rail 6. When the two half side rails 6 are assembled to one another so as to form the intermediate side rail 5, the protrusion 17 of one half side rail 6 is introduced in the recess 18 of the other half side rail 6.

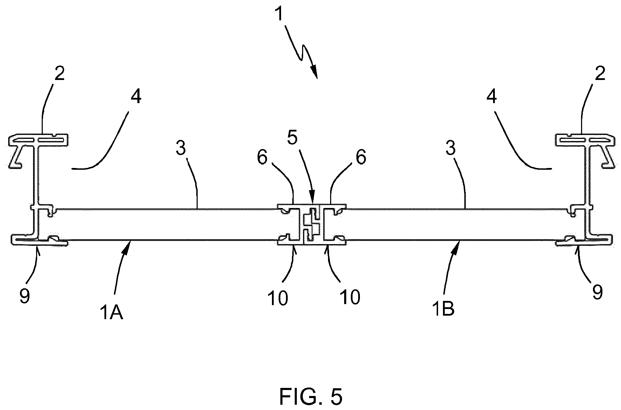

As can be seen in Figure 5, when the cable ladder 1 is formed with the two halves 1A, 1B attached by the intermediate side rail 5, formed by the two half side rails assembled together, said cable ladder 1 has a lower plane in which a lower face 9 of each side rail 2 and also a lower face 10 of each half side rail 6 are located. The lower faces 9, 10 of all side rails 2 and half side rails 6 are therefore coplanar and located in one lower plane of the cable tray 1. The intermediate side rail 5 formed by the two half side rails 6 assembled together has the general shape of an I-profile, with a lower flange 19 and an upper flange 20 demarcating one another on either side of said intermediate side rail 5, a channel 21 in which the ends of said crosspieces 3 tightly fit. This channel 21 has a height substantially equal to the height of the crosspieces 3, as can likewise be seen in Figure 5. Therefore, the intermediate side rail 5 only protrudes in height with respect to the crosspieces 3 in the thicknesses of the lower flange 19 and upper flange 20.

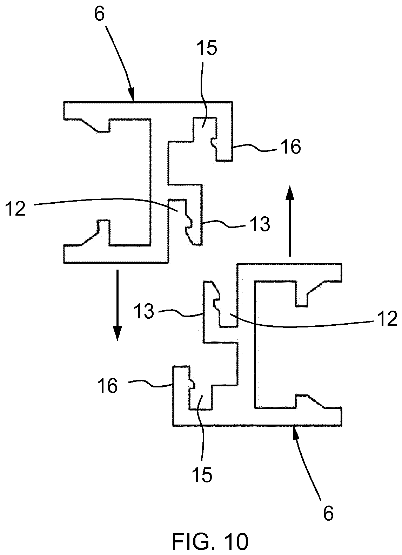

To assemble the two half side rails 6 together, they are placed one with respect to the other in the position shown in Figure 10, and a relative movement of one towards the other in the direction indicated by the arrows in the figure is performed in, said direction being perpendicular to the lower faces 9, 10 of the side rails 2 and half side rails 6. By means of this movement the second sides 8 of the half side rails snap fit together. In the final position shown in Figure 9, the second free end 16 of each half side rail 6 is introduced under pressure in the first cradle 12 of the other half side rail 6 and the protrusions 17 are introduced in the recesses 18 thus forming a snap fit.

Both the two side rails 2 and the two half side rails 6 and the crosspieces 3 are profiles made of a polymeric material, preferably a electrically insulating material, such as for example PVC (polyvinyl chloride) with a surface resistivity greater than 100 MΩ (surface resistivity measured according to standard EN 62631-3-2:2016). The polymeric material constituting side rails 2, half side rails 6, and crosspieces 3 can be different. However, preferably side rails 2, half side rails 6 and crosspieces 3 are made from the same polymeric material. The two side rails 2, the two half side rails 6 and the crosspieces 3 are preferably extruded profiles. In the depicted example, the crosspieces 3 comprise at their ends transverse grooves which are formed by machining after extruding the profile and are useful for snap fitting the ends of the crosspieces 3 into the channel of the inner side 4 of the side rails 2.

In the depicted example, the ends of the crosspieces 3 fit directly in the inner side 4 of the side rails 2 and in the first side 7 of the half side rails 6. Other embodiments in which the fitting between the ends of the crosspieces 3 and the inner side 4 of the side rails 2 is performed through an interposed connecting piece which fits, on one side, in the end of the crosspiece 3, and on the other, in the inner side 4 of the side rail 2 are possible. Embodiments in which the fit between the ends of the crosspieces 3 and the first side 7 of the half side rails 6 is performed through an interposed connecting piece interposed which fits, on one side, in the end of the crosspiece 3, and on the other side, in the first side 7 of the half side rail 6 are also possible.

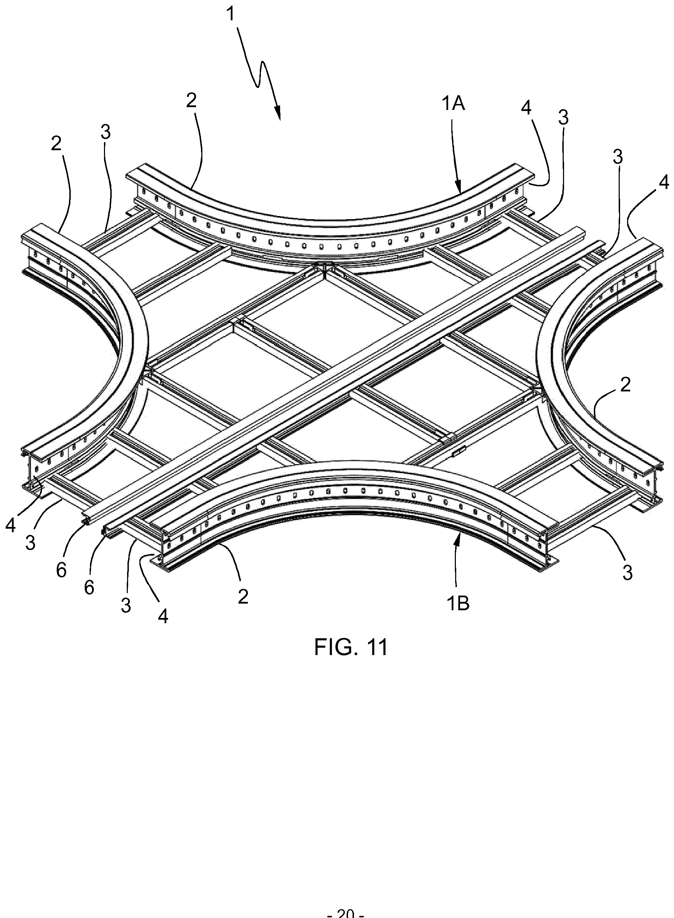

Figure 11 shows a second embodiment from among other possible embodiments, in which the cable ladder forms an X-crossing.

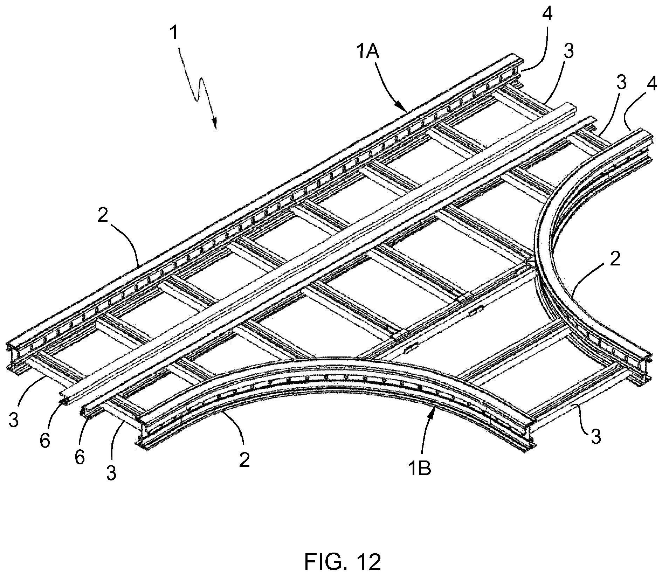

Figure 12 shows a third embodiment from among other possible embodiments, in which the cable ladder forms a T-joint.

In these embodiments of Figures 11 and 12, the half side rails 6 and the crosspieces 3 have the same shape as in the first embodiment shown in Figures 1 to 10. The cable ladder 1 is likewise formed by two halves 1A 1B, which are attached by assembling the two half side rails 6 together as described above for the first embodiment.

## Claims

1. A cable ladder (1), comprising two coplanar side rails (2) attached to one another by a plurality of crosspieces (3) spaced from one another, said plurality of crosspieces (3) constituting a discontinuous support surface for cables, wherein each of said crosspieces (3) is a profile made of a polymeric material and each of said side rails (2) is a profile made of a polymeric material, and wherein the ends of said crosspieces (3) fit in an inner side (4) of said side rails (2) facing an inner side (4) of the opposite side rail (2), **characterized in that** it comprises an intermediate side rail (5) arranged between said two side rails (2), said intermediate side rail (5) being formed by two half side rails (6) which are assembled together, each of said half side rails (6) being a profile made of a polymeric material and comprising a first side (7) in which said ends of the crosspieces (3) fit and a second side (8), opposite said first side (7), which fits in the second side (8) of the other one of said half side rails (6) so as to form said intermediate side rail (5).

2. The cable ladder (1) according to claim 1, **characterized in that** the two ends of each crosspiece (3) fit interchangeably in said first side (7) of any of the two half side rails (6) or in said inner side (4) of any of the two side rails (2).

3. The cable ladder (1) according to any one of claims 1 or 2, **characterized in that** each of said side rails (2) has a lower face (9) in one plane and each of said half side rails (6) has a lower face (10) in one plane, and said lower faces (9, 10) of said side rails (2) and of said half side rails (6) are coplanar.

4. The cable ladder (1) according to any one of claims 1 to 3, **characterized in that** said second sides (8) of the half side rails (6) are shaped such that they snap fit together by relative movement of one of said half side rails (6) with respect to the other one of said half side rails (6).

5. The cable ladder (1) according to claims 3 and 4, **characterized in that** said second sides (8) of the half side rails (6) are shaped such that they snap fit together by relative movement of one of said half side rails (6) with respect to the other one of said half side rails (6) in a direction perpendicular to the plane of said lower faces (9, 10) of said side rails (2) and of said half side rails (6).

6. The cable ladder (1) according to claim 5, **characterized in that** said second sides (8) of the half side rails (6) have a cross-section shape comprising a first bent toe (11) forming a first cradle (12) and a first free end (13), and a second bent toe (14) forming a second cradle (15) and a second free end (16), said second cradle (15) and said second free end (16) being shifted with respect to said first cradle (12) and said first free end (13), and said first bent toe (11) and said second bent toe (14) being sized such that said first free end (13) and said second free end (16) of each of said half side rails (6) fit, respectively, in said second cradle (15) and said first cradle (12) of the other one of said half side rails (6).

7. The cable ladder (1) according to claim 6, **characterized in that** said first free end (13) and second free end (16) of the two half side rails (6) comprise complementary singular forms (17, 18), shaped such that the first free end (13) and the second free end (16) of one of said half side rails (6) are respectively snapped together with the second free end (16) and the first free end (13) of the other one of said half side rails (6) through the cooperation of said singular forms (17, 18) between them.

8. The cable ladder (1) according to any one of claims 1 to 7, **characterized in that** said intermediate side rail (5) formed by the two half side rails (6) assembled together has the general shape of an I-profile, with a lower flange (19) and an upper flange (20) demarcating one another on either side of said intermediate side rail (5), a channel (21) in which the ends of said crosspieces (3) fit, said channel (21) having a height substantially equal to the height of said crosspieces (3).

9. The cable ladder (1) according to any one of claims 1 to 8, **characterized in that** said two half side rails (6) are equal to one another.

## Patentansprüche

1. Eine Kabelleiter (1), aufweisend zwei koplanare Seitenholme (2), die durch eine Vielzahl von zueinander beabstandeten Querstücken (3) aneinander verbunden sind, wobei die Vielzahl der Querstücke (3) eine diskontinuierliche Auflagefläche für die Kabel ausbilden, wobei jedes der Querstücke (3) ein aus einem polymeren Material hergestelltes Profil ist und jedes der Seitenholme (2) ein aus einem polymeren Material hergestelltes Profil ist, und wobei die Enden der Querstücke (3) in eine Innenseite (4) der Seitenholme (2) passen, die einer Innenseite (4) des gegenüberliegenden Seitenholmes (2) zugewandt ist,
**dadurch gekennzeichnet, dass** sie einen mittleren Seitenholm (5) umfasst, der zwischen den zwei Seitenholmen (2) angeordnet ist, wobei der mittlere Seitenholm (5) aus zwei halben Seitenholme (6) ausgebildet wird, welche zusammengefügt sind, wobei jede der halben Seitenholme (6) ein aus einem polymeren Material hergestelltes Profil sind und eine erste Seite (7), in welche die Enden der Querstücke (3) passen und eine zweite Seite (8) aufweisen, welche der ersten Seite (7) gegenüberliegend ist, die in die zweite Seite (8) der anderen der halben Seitenholme (6) passt, um den mittleren Seitenolm (5) auszubilden.

2. Die Kabelleiter (1) nach Anspruch 1, **dadurch gekennzeichnet, dass** die zwei Enden jedes Querstückes (3) austauschbar in die erste Seite (7) einer der beiden halben Seitenholme (6) oder in die innere Seite (4) von einer der zwei Seitenholme (2) passen.

3. Die Kabelleiter (1) nach einem der Ansprüche 1 oder 2, **dadurch gekennzeichnet, dass** jeder der Seitenholme (2) eine Unterseite (9) in einer Ebene hat und jede der halben Seitenholme (6) eine Unterseite in einer Ebene hat, und die Unterseiten (9, 10) der Seitenholme (2) und der halben Seitenholme (6) koplanar sind.

4. Die Kabelleiter (1) nach einem der Ansprüche 1 oder 3, **dadurch gekennzeichnet, dass** die zweiten Seiten (8) der halben Seitenholme (6) so geformt sind, dass sie durch eine Relativbewegung von einer der besagten halben Seitenholme (6) in Bezug auf die andere eine der halben Seitenholme (6) miteinander zusammenschnappen.

5. Die Kabelleiter (1) nach den Ansprüchen 3 und 4, **dadurch gekennzeichnet, dass** die zweiten Seiten (8) der halben Seitenholme (6) so geformt sind, dass sie durch eine Relativbewegung von einer der halben Seitenholme (6) in Bezug auf die andere eine der halben Seitenholme (6) in einer Richtung senkrecht zu einer Ebene der Unterseiten (9, 10) der Seitenholme (2) und der halben Seitenholme (6) miteinander zusammenschnappen.

6. Die Kabelleiter (1) nach Anspruch 5, **dadurch gekennzeichnet, dass** die zweiten Seiten (8) der halben Seitenholme (6) eine Querschnittsform aufweisen, die eine erste gebogene Zehe (11), die eine erste Mulde (12) und ein erstes freies Ende (13) ausbildet, und eine zweite gebogene Zehe (14) umfassen, die eine zweite Mulde (15) und ein zweites freies Ende (16) ausbildet, wobei die zweite Mulde (15) und das zweite freie Ende (16) in Bezug auf die erste Mulde (12) und das erste freie Ende (13) versetzt sind, und wobei die erste gebogene Zehe (11) und die zweite gebogene Zehe (14) so bemessen sind, dass das erste freie Ende (13) und das zweite frei Ende (16) jeder der halben Seitenholme (6) jeweils in die zweite Mulde (15) und die erste Mulde (12) der anderen einen der halben Seitenholme (6) passen.

7. Die Kabelleiter (1) nach Anspruch 6, **dadurch gekennzeichnet, dass** das erste freie Ende (13) und das zweite freie Ende (16) der zweiten halben Seitenholme (6) komplementäre Einzelformen (17, 18) aufweisen, die so geformt sind, dass das erste freie Ende (13) und das zweite freie Ende (16) von einer der halben Seitenholme (6) jeweils mit dem zweiten freie Ende (16) und dem ersten freien Ende (13) der anderen einen der halben Seitenholme (6) durch das Zusammenwirken der Einzelformen (17, 18) zwischen ihnen miteinander zusammenschnappen.

8. Die Kabelleiter (1) nach einem der Ansprüche 1 bis 7, **dadurch gekennzeichnet, dass** der mittlere Seitenholm (5), der durch die zwei miteinander zusammengebauten halben Seitenholme (6) ausgebildet wird, im Wesentlichen die Form eines I-Profiles mit einem unteren Flansch (19) und einem oberen Flansch (20) hat, die einander auf beiden Seiten des mittleren Seitenholmes (5) einen Kanal (21) abgrenzen, in den die Enden der Querstücke (3) passen, wobei der Kanal (21) eine Höhe hat, die im Wesentlichen gleich der Höhe der Querstücke (3) ist.

9. Die Kabelleiter (1) gemäß einem der Ansprüche 1 bis 8, **dadurch gekennzeichnet, dass** die beiden halben Seitenholme (6) einander gleich sind.

## Revendications

1. Échelle à câbles (1), comprenant deux rails latéraux coplanaires (2) joints l'un à l'autre par une pluralité de traverses (3) espacées les unes des autres, ladite pluralité de traverses (3) constituant une surface de support discontinue pour des câbles, dans laquelle chacune desdites traverses (3) est un profilé composé d'un matériau polymère et chacun desdits rails latéraux (2) est un profilé composé d'un matériau polymère, et dans laquelle les extrémités desdites traverses (3) s'ajustent dans un côté intérieur (4) desdits rails latéraux (2) faisant face à un côté intérieur (4) du rail latéral (2) opposé, **caractérisée en ce qu'**elle comprend un rail latéral intermédiaire (5) agencé entre lesdits deux rails latéraux (2), ledit rail latéral intermédiaire (5) étant formé par deux demi-rails latéraux (6) qui sont assemblés ensemble, chacun desdits demi-rails latéraux (6) étant un profilé composé d'un matériau polymère et comprenant un premier côté (7) dans lequel lesdites extrémités des traverses (3) s'ajustent et un second côté (8), opposé audit premier côté (7), qui s'ajuste dans le second côté (8) de l'autre desdits demi-rails latéraux (6) de manière à former ledit rail latéral intermédiaire (5).

2. Échelle à câbles (1) selon la revendication 1, **caractérisée en ce que** les deux extrémités de chaque traverse (3) s'ajustent de manière interchangeable dans ledit premier côté (7) de l'un quelconque des deux demi-rails latéraux (6) ou dans ledit côté intérieur (4) de l'un quelconque des deux rails latéraux (2).

3. Échelle à câbles (1) selon l'une quelconque des revendications 1 ou 2, **caractérisée en ce que** chacun desdits rails latéraux (2) comporte une face inférieure (9) dans un plan et chacun desdits demi-rails latéraux (6) comporte une face inférieure (10) dans un plan, et lesdites faces inférieures (9, 10) desdits rails latéraux (2) et desdits demi-rails latéraux (6) sont coplanaires.

4. Échelle à câbles (1) selon l'une quelconque des revendications 1 à 3, **caractérisée en ce que** lesdits seconds côtés (8) des demi-rails latéraux (6) sont façonnés de sorte à s'emboîter ensemble à pression par déplacement relatif d'un desdits demi-rails latéraux (6) par rapport à l'autre desdits demi-rails latéraux (6).

5. Échelle à câbles (1) selon les revendications 3 et 4, **caractérisée en ce que** lesdits seconds côtés (8) des demi-rails latéraux (6) sont façonnés de telle sorte qu'ils s'emboîtent ensemble à pression par un déplacement relatif d'un desdits demi-rails latéraux (6) par rapport à l'autre desdits demi-rails latéraux (6) dans une direction perpendiculaire au plan desdites faces inférieures (9, 10) desdits rails latéraux (2) et desdits demi-rails latéraux (6).

6. Échelle à câbles (1) selon la revendication 5, **caractérisée en ce que** lesdits seconds côtés (8) des demi-rails latéraux (6) présentent une forme en section transversale comprenant une première patte courbée (11) formant un premier berceau (12) et une première extrémité libre (13), et une seconde patte courbée (14) formant un second berceau (15) et une seconde extrémité libre (16), ledit second berceau (15) et ladite seconde extrémité libre (16) étant décalés par rapport audit premier berceau (12) et à ladite première extrémité libre (13), et ladite première patte courbée (11) et ladite seconde patte courbée (14) étant dimensionnées de telle sorte que ladite première extrémité libre (13) et ladite seconde extrémité libre (16) de chacun desdits demi-rails latéraux (6) s'ajustent respectivement dans ledit second berceau (15) et ledit premier berceau (12) de l'autre desdits demi-rails latéraux (6).

7. Échelle à câbles (1) selon la revendication 6, **caractérisée en ce que** lesdites première extrémité libre (13) et seconde extrémité libre (16) des deux demi-rails latéraux (6) comprennent des formes singulières complémentaires (17, 18), façonnées de telle sorte que la première extrémité libre (13) et la seconde extrémité libre (16) de l'un desdits demi-rails latéraux (6) s'emboîtent respectivement avec la seconde extrémité libre (16) et la première extrémité libre (13) de l'autre desdits demi-rails latéraux (6) par coopération desdites formes singulières (17, 18) entre elles.

8. Échelle à câbles (1) selon l'une quelconque des revendications 1 à 7, **caractérisée en ce que** ledit rail latéral intermédiaire (5) formé par les deux demi-rails latéraux (6) assemblés ensemble présente la forme générale d'un profilé en I, avec une aile inférieure (19) et une aile supérieure (20) qui délimitent entre elles, de chaque côté dudit rail latéral intermédiaire (5), un canal (21) dans lequel les extrémités desdites traverses (3) s'ajustent, ledit canal (21) ayant une hauteur sensiblement égale à la hauteur desdites traverses (3).

9. Échelle à câbles (1) selon l'une quelconque des revendications 1 à 8, **caractérisée en ce que** lesdits deux demi-rails latéraux (6) sont égaux l'un à l'autre.
